# EUROPEAN PATENT APPLICATION

(11) **EP 4 847 801 A1**
(43) Date of publication of application: **02.12.2026**
(21) Application number: 26181823.1
(22) Date of filing: 29.05.2026
(51) Int. Cl.: F16H 57/021, F16H 57/00, B60K 1/00, F16H 57/023

(54) **POWERTRAIN AND ELECTRIC VEHICLE**

(30) Priority: 29.05.2025 CN 202521091805 U
(71) Applicant: Huawei Technologies Co., Ltd., Shenzhen, Guangdong 518129 (CN)
(72) Inventor: SHAN, Runliu, Shenzhen, Guangdong, 518129 (CN); JIANG, Kui, Shenzhen, Guangdong, 518129 (CN); HE, Caimao, Shenzhen, Guangdong, 518129 (CN); LIU, Xiaosu, Shenzhen, Guangdong, 518129 (CN)
(74) Representative: Maiwald GmbH

(57) **Abstract**

This application provides a powertrain and an electric vehicle. A housing of the powertrain includes a motor cavity and a reducer cavity. A rotating shaft of a drive motor extends from the motor cavity to the reducer cavity through an intermediate bearing housing in an axial direction of the drive motor. The rotating shaft includes a first segment, a second segment, and a third segment. The first segment is configured to fasten a motor rotor, the second segment is configured to fasten an inner ring of an intermediate bearing, and the third segment has a tooth portion. The first segment is located in the motor cavity, and the third segment is located in the reducer cavity. An inner circumferential wall of the intermediate bearing housing is configured to fasten the intermediate bearing, and a bottom of the intermediate bearing housing is configured to abut against the intermediate bearing in the axial direction of the drive motor. An opening of the intermediate bearing housing faces away from the reducer cavity in the axial direction of the drive motor. In this application, a function of an input shaft of a reducer is integrated into the rotating shaft of the drive motor, so that problems of great difficulty in assembly and disassembly, noise, and potential failure caused by a spline fit between the rotating shaft and the input shaft can be avoided.

## Description

### TECHNICAL FIELD

This application relates to the field of electric vehicles, and in particular, to a powertrain and an electric vehicle.

### BACKGROUND

In the electric vehicle industry, a powertrain is a power source of an entire vehicle. With the development of electric vehicles, there are increasing requirements for NVH performance and miniaturization design of powertrains. In a powertrain, a motor transmits torque to an input shaft of a reducer through a motor shaft, to drive wheels to rotate. Currently, the motor shaft and the input shaft usually implement a transmission connection through a spline fit. However, the spline fit leads to great difficulty in assembly and disassembly, and further causes problems of low-order noise and wear failure. This is not conducive to improving operation efficiency of the powertrain and safety performance of an electric vehicle.

### SUMMARY

Embodiments of this application provide a powertrain and an electric vehicle.

According to a first aspect, an embodiment of this application provides a powertrain. A housing of the powertrain includes a motor cavity and a reducer cavity. The motor cavity is provided to accommodate a motor rotor of a drive motor in the powertrain. The reducer cavity is provided to accommodate a parallel-axis gear set of a reducer in the powertrain. A rotating shaft of the drive motor extends from the motor cavity to the reducer cavity through an intermediate bearing housing in an axial direction of the drive motor.

The rotating shaft includes a first segment, a second segment, and a third segment that are sequentially arranged in the axial direction of the drive motor. The first segment is configured to fasten the motor rotor, the second segment is configured to fasten an inner ring of an intermediate bearing, the third segment has a tooth portion, and the tooth portion is configured to engage with an intermediate driven gear in the parallel-axis gear set. The first segment is located in the motor cavity, and the third segment is located in the reducer cavity.

An inner circumferential wall of the intermediate bearing housing is configured to fasten an outer ring of the intermediate bearing, and a bottom of the intermediate bearing housing is configured to abut against the outer ring of the intermediate bearing in the axial direction of the drive motor. An opening of the intermediate bearing housing faces away from the reducer cavity in the axial direction of the drive motor.

In an embodiment of this application, to avoid existing problems of complex assembly and disassembly, noise, and fretting wear caused by a spline fit between a motor shaft and an input shaft, in this embodiment of this application, based on the rotating shaft of the drive motor, a function of the input shaft is integrated into the rotating shaft, that is, the rotating shaft is used to replace an existing combination of the motor shaft and the input shaft.

Specifically, the rotating shaft extends from the motor cavity to the reducer cavity, the first segment of the rotating shaft is located in the motor cavity, and the third segment of the rotating shaft is located in the reducer cavity, providing a prerequisite for integrating the function of the input shaft into the rotating shaft. The first segment is configured to fasten the motor rotor, so that the rotating shaft can directly receive torque transmitted by the motor rotor, functioning as the motor shaft. The third segment has the tooth portion, and the tooth portion is configured to engage with the intermediate driven gear. In other words, the tooth portion serves as an input gear to be in a transmission connection with the reducer, so that the rotating shaft can further transmit torque directly to the reducer. Because the rotating shaft eliminates a spline fit structure, in embodiments of this application, difficulty in assembly and disassembly can be reduced, noise generated by the rotating shaft can be reduced, NVH performance can be improved, and a risk of failure of a transmission connection between the rotating shaft and the reducer can be reduced, prolonging a service life of the rotating shaft.

In an embodiment of this application, in addition to the first segment and the third segment, the rotating shaft further includes the second segment. The second segment is configured to fasten the inner ring of the intermediate bearing, the intermediate bearing housing is configured to fasten the outer ring of the intermediate bearing, and the intermediate bearing is for supporting the rotating shaft. The rotating shaft integrates the first segment, the second segment, and the tooth portion, and the first segment, the second segment, and the tooth portion may be machined integrally, to meet a coaxiality requirement. The rotating shaft does not need to reserve space for a spline fit, leading to high integration, and reducing an axial size of the rotating shaft. This helps implement miniaturization design of the powertrain.

In an embodiment of this application, the rotating shaft extends from the motor cavity to the reducer cavity through the intermediate bearing housing. During mounting and disassembly of the rotating shaft, an orientation of the opening of the intermediate bearing housing affects assembly and disassembly difficulty and costs.

Specifically, if the opening of the intermediate bearing housing faces the reducer cavity, the rotating shaft passes sequentially through the bottom and the opening of the intermediate bearing housing during mounting, and then the intermediate bearing cannot be fastened to the rotating shaft in advance. If the intermediate bearing is fastened to the rotating shaft in advance, the intermediate bearing is obstructed by the bottom of the intermediate bearing housing. Therefore, the intermediate bearing can only be fastened to the intermediate bearing housing first. In this case, the rotating shaft needs to pass through the inner ring of the intermediate bearing during mounting, potentially causing collision. Usually, the rotating shaft and the motor rotor are fastened and then mounted together. During mounting, a position of the intermediate bearing is obstructed by the rotating shaft and the motor rotor, increasing difficulty in ensuring coaxiality. In addition, during disassembly of the rotating shaft, due to obstruction by the bottom of the intermediate bearing housing, the intermediate bearing cannot be removed together with the rotating shaft. Therefore, the intermediate bearing can only be separated from the rotating shaft first, potentially causing damage to the intermediate bearing during separation.

To reduce assembly and disassembly difficulty and costs of the powertrain, in an embodiment of this application, when the rotating shaft integrates the first segment, the second segment, and the third segment, the opening of the intermediate bearing housing is adjusted to face away from the reducer cavity in the axial direction of the drive motor. During mounting of the rotating shaft, the intermediate bearing may be fastened to the second segment of the rotating shaft in advance, so that a mounting operation can be completed on the intermediate bearing and the rotating shaft together. Compared with a mounting manner in which the rotating shaft passes through the inner ring of the intermediate bearing during mounting, an embodiment of this application, in which the rotating shaft and the intermediate bearing together pass through the opening of the intermediate bearing housing until the outer ring of the intermediate bearing abuts against the bottom of the intermediate bearing housing, helps simplify an assembly process, and can avoid collision between the intermediate bearing and the rotating shaft. In addition, during disassembly of the rotating shaft, because the intermediate bearing cannot be obstructed by the bottom of the intermediate bearing housing, the intermediate bearing and the rotating shaft can be removed as a whole. This helps reduce damage to the intermediate bearing, improving a service life of the rotating shaft and the intermediate bearing.

In an embodiment, the bottom of the intermediate bearing housing includes a through bearing housing hole in the axial direction of the drive motor, the rotating shaft passes through the bearing housing hole and extends to the reducer cavity, an inner diameter of the bearing housing hole is less than an outer diameter of the outer ring of the intermediate bearing, and the inner diameter of the bearing housing hole is less than an inner diameter of the opening of the intermediate bearing housing.

In an embodiment of this application, the bottom of the intermediate bearing housing includes the bearing housing hole, the bearing housing hole passes through the bottom of the intermediate bearing housing in the axial direction of the drive motor, and the third segment of the rotating shaft passes through the bearing housing hole and extends to the reducer cavity. Because the bottom of the intermediate bearing housing needs to abut against a side surface of the intermediate bearing in the axial direction of the drive motor, the inner diameter of the bearing housing hole located at the bottom of the intermediate bearing housing needs to be less than the outer diameter of the outer ring of the intermediate bearing. The inner diameter of the opening of the intermediate bearing housing is greater than the inner diameter of the bearing housing hole, facilitating the rotating shaft and the intermediate bearing to pass through the opening of the intermediate bearing housing, and preventing obstruction in assembly and disassembly of the rotating shaft and the intermediate bearing.

In an embodiment, the inner diameter of the bearing housing hole is greater than an outer diameter of the tooth portion.

In an embodiment of this application, during mounting of the rotating shaft, the tooth portion of the rotating shaft passes through the bearing housing hole of the intermediate bearing housing before the second segment does. If the outer diameter of the tooth portion is greater than the inner diameter of the bearing housing hole, the tooth portion cannot pass through the bearing housing hole, hindering mounting and disassembly of the rotating shaft and the intermediate bearing.

In an existing solution of a spline fit between a motor shaft and an input shaft, the motor shaft and the input shaft may be mounted sequentially in two opposite directions, so that a problem that an input gear of the input shaft hinders mounting of the motor shaft and the input shaft can be avoided. In an embodiment of this application, the tooth portion is integrated into the third segment of the rotating shaft, and the third segment of the rotating shaft extends to the reducer cavity. Different from the existing solution, to apply the rotating shaft to the powertrain, this embodiment needs to avoid an influencing factor that interferes with mounting of the rotating shaft. Therefore, in an embodiment of this application, the outer diameter of the tooth portion is adjusted to be less than the inner diameter of the bearing housing hole. This facilitates reducing interference with mounting of the rotating shaft by the tooth portion, reducing mounting difficulty and costs of the rotating shaft.

In an embodiment, a ratio of the inner diameter of the bearing housing hole to the outer diameter of the tooth portion is greater than or equal to 1.6.

In an embodiment of this application, the motor rotor is fastened to the first segment of the rotating shaft, and the motor rotor is usually mounted together with the rotating shaft. An outer diameter of the motor rotor is greater than the outer diameter of the outer ring of the intermediate bearing. During mounting, the motor rotor with a large outer diameter may obstruct an operator's view. Therefore, in an embodiment of this application, the ratio of the inner diameter of the bearing housing hole to the outer diameter of the tooth portion is adjusted to be greater than or equal to 1.6, so that a risk of collision between the tooth portion of the rotating shaft and the bearing housing hole during mounting can be reduced.

In an embodiment, the housing of the powertrain includes an intermediate separator plate, the intermediate separator plate is located between the motor cavity and the reducer cavity in the axial direction of the drive motor, and the intermediate bearing housing is located on the intermediate separator plate.

The intermediate separator plate is configured to fasten a pressing plate, in the axial direction of the drive motor, the pressing plate is located on a side that is of the intermediate bearing and that faces away from the tooth portion, and the pressing plate is configured to abut against the intermediate separator plate and the outer ring of the intermediate bearing.

In an embodiment of this application, the intermediate separator plate is configured to separate the motor cavity and the reducer cavity, and the intermediate bearing housing is located on the intermediate separator plate. In the axial direction of the drive motor, the opening of the intermediate bearing housing faces away from the reducer cavity, and the outer ring of the intermediate bearing faces a side surface of the bottom of the intermediate bearing housing and abuts against the intermediate bearing housing. The pressing plate is located on a side that is of the intermediate bearing and that faces away from the tooth portion. The cooperation between the pressing plate and the bottom of the intermediate bearing housing allows two side surfaces of the outer ring of the intermediate bearing to be fastened in the axial direction of the drive motor. The pressing plate is further configured to abut against the intermediate separator plate, for the intermediate separator plate to fasten the pressing plate.

In an embodiment of this application, the pressing plate can further avoid a creep failure of the outer ring of the intermediate bearing. The inner ring of the intermediate bearing is fastened to the rotating shaft, and the outer ring of the intermediate bearing is fastened to the intermediate bearing housing. When the inner ring of the intermediate bearing rotates at a high speed with the rotating shaft, a rolling body located between the inner ring and the outer ring of the intermediate bearing may drive the outer ring of the intermediate bearing to slide relative to the intermediate bearing housing, causing outer ring creep of the intermediate bearing. In an embodiment of this application, when the rotating shaft integrates the first segment, the second segment, and the third segment, the pressing plate abuts against the outer ring of the intermediate bearing, so that the outer ring of the intermediate bearing can be limited in the axial direction. This helps reduce damage to the intermediate bearing and the intermediate bearing housing, increasing a service life and reliability of the intermediate bearing.

In an embodiment, the intermediate separator plate includes a first surface, a second surface, and a first fixed hole, the first surface and the second surface respectively face the motor cavity and the reducer cavity in the axial direction of the drive motor, the first fixed hole passes through the first surface and the second surface, and the pressing plate includes a second fixed hole.

The first fixed hole and the second fixed hole are opposite to each other in the axial direction of the drive motor, one end of a fastener of the powertrain extends from the second surface to the second fixed hole through the first fixed hole in the axial direction of the drive motor, and the other end of the fastener is located in the reducer cavity.

In an embodiment of this application, after the intermediate bearing is mounted to the intermediate bearing housing, the fastener passes through the first fixed hole and the second fixed hole to fasten the pressing plate to the intermediate separator plate, to limit the outer ring of the intermediate bearing in the axial direction. The motor rotor, the intermediate bearing, and the rotating shaft enter the motor cavity together. In the axial direction of the drive motor, the first surface and the second surface of the intermediate separator plate respectively face the motor cavity and the reducer cavity. If a mounting direction of the fastener is from the first surface to the second surface, the motor rotor and the rotating shaft occupy some space of the motor cavity, making it more difficult to pass the fastener through the intermediate separator plate from the motor cavity. In an embodiment of this application, a mounting direction of the fastener is opposite to a mounting direction of the intermediate bearing. One end of the fastener passes sequentially through the second surface and the first surface, and then extends into the second fixed hole, so that a structure that has been mounted in the motor cavity can be avoided, helping reduce operation difficulty in fastening the pressing plate.

In an embodiment of this application, before disassembly of the rotating shaft and the intermediate bearing, the pressing plate and the intermediate separator plate need to be separated first by using the fastener. Because the other end of the fastener is located in the reducer cavity, a disassembly operation of passing the fastener sequentially through the first surface and the second surface can be completed in the reducer cavity. This helps avoid structures such as the rotating shaft, the motor rotor, and the motor stator in the motor cavity, and helps simplify a disassembly process.

In an embodiment, the intermediate bearing and the opening of the intermediate bearing housing are spaced apart in the axial direction of the drive motor, the pressing plate includes an annular protrusion, the annular protrusion extends from the opening of the intermediate bearing housing into the intermediate bearing housing, an end of the annular protrusion is configured to abut against the outer ring of the intermediate bearing in the axial direction of the drive motor, and the intermediate bearing housing is configured to fasten an outer circumferential surface of the annular protrusion.

In an embodiment of this application, the pressing plate includes the annular protrusion, and the end of the annular protrusion and the bottom of the intermediate bearing housing respectively abut against the two side surfaces of the outer ring of the intermediate bearing in the axial direction of the drive motor. The annular protrusion of the pressing plate extends into the intermediate bearing housing, and the annular protrusion can play a role in pre-fastening the pressing plate. Specifically, before the rotating shaft is mounted to the housing of the powertrain, the intermediate bearing may be first mounted on the second segment of the rotating shaft, and then the pressing plate may be sleeved on the rotating shaft, so that the pressing plate is located on a side that is of the intermediate bearing and that faces away from the tooth portion. After the intermediate bearing is mounted to the intermediate bearing housing, the annular protrusion of the pressing plate is also embedded in the intermediate bearing housing, for the fastener to subsequently fasten the pressing plate and the intermediate separator plate, avoiding movement of the pressing plate in a process of fastening the pressing plate and the intermediate separator plate.

In an embodiment, the first segment and the third segment are respectively configured to fasten an inner ring of a motor bearing and an inner ring of a reducer bearing, a cavity wall on a side of the reducer cavity and the intermediate separator plate are opposite to each other in the axial direction of the drive motor, the cavity wall on the side of the reducer cavity includes a reducer bearing housing, an inner circumferential wall of the reducer bearing housing is configured to fasten an outer ring of the reducer bearing, and the tooth portion is adjacent to an opening of the reducer bearing housing.

The outer ring of the reducer bearing and a bottom of the reducer bearing housing are spaced apart in the axial direction of the drive motor.

In an embodiment of this application, in the axial direction of the drive motor, the cavity wall on the side of the reducer cavity is away from the motor rotor. A bearing fastened to the rotating shaft includes the motor bearing, the intermediate bearing, and the reducer bearing that are sequentially arranged in the axial direction of the drive motor. The reducer bearing housing on the cavity wall on the side of the reducer cavity is configured to fasten the outer ring of the reducer bearing, and the opening of the reducer bearing housing faces the tooth portion in the axial direction of the drive motor.

In an embodiment of this application, because the rotating shaft integrates a function of the input shaft of the reducer, a size and a volume of the rotating shaft are both larger than those of the motor shaft. Therefore, in an embodiment of this application, a three-bearing structure is used, so that support effect on the rotating shaft can be enhanced by using a plurality of bearings, reducing a risk of bending and deformation of the rotating shaft.

In an embodiment of this application, the rotating shaft is essentially one shaft, and the three-bearing structure used on one shaft may cause an over-positioning problem. Over-positioning is a mechanical interference phenomenon in which a same degree of freedom of a workpiece is repeatedly restricted by a plurality of support points. Over-positioning caused by a three-bearing structure exacerbates bearing wear and interferes with torque transmission through the rotating shaft. To reduce an adverse impact of over-positioning on the rotating shaft and the bearing, in an embodiment of this application, the reducer bearing is spaced apart from the bottom of the reducer bearing housing. A gap between the reducer bearing and the reducer bearing housing can provide an allowance for the rotating shaft to move in the axial direction of the drive motor, weakening a constraint of the reducer bearing on a degree of freedom of movement of the rotating shaft in the axial direction of the drive motor, thereby helping mitigate an axial over-positioning problem.

When a direction of an axial force generated by the parallel-axis gear set on the rotating shaft is parallel to a direction from the first segment to the second segment, the axial force is directly transmitted to the intermediate separator plate through the intermediate bearing. In this case, because the intermediate separator plate of the powertrain already bears the axial force, the gap between the reducer bearing and the reducer bearing housing does not cause an adverse impact on limiting the rotating shaft in the axial direction. When the direction of the axial force generated by the parallel-axis gear set on the rotating shaft is parallel to a direction from the second segment to the first segment, the axial force is transmitted to the intermediate separator plate through the intermediate bearing and the pressing plate, that is, the intermediate separator plate is used to bear the axial force. This helps reduce axial play of the rotating shaft, enhancing NVH performance. An interaction force between the rotating shaft and the pressing plate can enhance rigidity of the rotating shaft and the motor rotor, thereby increasing a critical rotational speed of the rotating shaft. In an embodiment of this application, a position relationship between the reducer bearing and the bottom of the reducer bearing housing is adjusted without interfering with axial limiting of the rotating shaft, mitigating an axial over-positioning problem.

In an embodiment, a distance between the tooth portion and the intermediate bearing is greater than a distance between the tooth portion and the reducer bearing in the axial direction of the drive motor, the rotating shaft is further configured to fasten a first shaft sleeve, the first shaft sleeve is configured to abut against the inner ring of the reducer bearing, the first shaft sleeve is located between the tooth portion and the reducer bearing in the axial direction of the drive motor, and an outer diameter of the first shaft sleeve is greater than or equal to the outer diameter of the tooth portion.

In an embodiment of this application, an axial length of the tooth portion needs to adapt to a gear in the parallel-axis gear set. Therefore, the axial length of the tooth portion is usually fixed. The first shaft sleeve mounted between the tooth portion and the inner ring of the reducer bearing can compensate for the axial length of the tooth portion, so that the inner ring of the reducer bearing can be limited by the first shaft sleeve, reducing axial play of the reducer bearing and the rotating shaft. The outer diameter of the first shaft sleeve is greater than or equal to the outer diameter of the tooth portion. This helps increase a contact area between the first shaft sleeve and the inner ring of the reducer bearing.

In an embodiment, a radial clearance of the intermediate bearing is greater than a radial clearance of at least one of the motor bearing or the reducer bearing.

In an embodiment of this application, based on a magnitude relationship among radial clearances of the motor bearing, the intermediate bearing, and the reducer bearing, the intermediate bearing in the radial direction of the drive motor may be used as a floating end, and the motor bearing and the reducer bearing may be used as fixed ends. This helps mitigate a radial over-positioning problem caused by use of a three-bearing structure on the rotating shaft.

In an embodiment, the first segment is further configured to fasten two end plates, the two end plates are located on two sides of the motor rotor in the axial direction of the drive motor, a first shoulder of the rotating shaft protrudes from the first segment in a radial direction of the drive motor, the motor rotor, one end plate, the first shoulder, and the intermediate bearing housing are sequentially arranged in the axial direction of the drive motor, and the first shoulder is configured to abut against the one end plate.

The pressing plate is located between the one end plate and the intermediate bearing in the axial direction of the drive motor, and a length of the one end plate is greater than a length of the pressing plate in the radial direction of the drive motor.

In an embodiment of this application, the two end plates are adjacently arranged on the two sides of the motor rotor in the axial direction of the drive motor. The rotating shaft includes a first shoulder, the outer diameter of the first shoulder is greater than the outer diameter of the first segment, and the first shoulder abuts against one end plate to limit the one end plate and the motor rotor. The pressing plate is located between the one end plate and the intermediate bearing in the axial direction of the drive motor. The radial length of the one end plate is greater than the radial length of the pressing plate. Before the pressing plate and the intermediate separator plate are fastened, the one end plate can limit movement of the pressing plate, reducing difficulty of an assembly process.

In an embodiment, the first segment is further configured to fasten a second shaft sleeve, the second shaft sleeve is configured to abut against the other end plate in the axial direction of the drive motor to fasten the motor rotor and the two end plates, the second shaft sleeve is located on a side that is of the other end plate and that faces away from the pressing plate, and an outer diameter of the second shaft sleeve is greater than an outer diameter of the first shoulder.

In an embodiment of this application, the second shaft sleeve and the first shoulder are respectively configured to abut against the other end plate and the one end plate. The cooperation between the second shaft sleeve and the first shoulder can fasten the motor rotor and the two end plates tightly, reducing axial play of the motor rotor.

In an embodiment of this application, the second shaft sleeve and the rotating shaft are of separate structures. Compared with the first shoulder, the second shaft sleeve may be adjusted in position relative to the rotating shaft, the motor rotor, and the other end plate. The second shaft sleeve with a relatively large outer diameter helps increase a contact area between the second shaft sleeve and the other end plate, enhancing stability of a fixed connection between the motor rotor and the rotating shaft and a fixed connection between the two end plates and the rotating shaft. Because the second shaft sleeve is located on a side that is of the other end plate and that faces away from the pressing plate, a large outer diameter of the second shaft sleeve does not interfere with mounting of the rotating shaft, the intermediate bearing, and the pressing plate.

In an embodiment, a second shoulder of the rotating shaft protrudes from the second segment in the radial direction of the drive motor, the second shoulder is configured to abut against one side surface of the inner ring of the intermediate bearing in the axial direction of the drive motor, in the axial direction of the drive motor, the second shoulder is located on a side that is of the second segment and that faces away from the tooth portion, and a part of the second shoulder is located in the intermediate bearing housing.

In an embodiment of this application, the second shoulder is configured to abut against one side surface of the intermediate bearing in the axial direction of the drive motor, so that axial play of the intermediate bearing relative to the second shoulder can be reduced. This helps reduce wear on the rotating shaft and the intermediate bearing, improving operation efficiency of the powertrain.

In an embodiment of this application, from a perspective of avoiding interference with mounting of the rotating shaft, because an outer diameter of the second shoulder is greater than the outer diameter of the second segment, the second shoulder needs to be arranged on a side that is of the second segment and that faces away from the tooth portion, so that the second shoulder can be prevented from hindering a mounting operation of fastening the intermediate bearing to the rotating shaft in advance.

In an embodiment of this application, because the intermediate bearing housing needs to accommodate the annular protrusion of the pressing plate, an axial length of the intermediate bearing housing needs to be greater than an axial length of the intermediate bearing. To make the second shoulder abut against the inner ring of the intermediate bearing, a part of the second shoulder is located in the intermediate bearing housing, so that an excessively large axial length of the second shoulder can be avoided.

In an embodiment, an annular groove of the rotating shaft is recessed from the second segment in the radial direction of the drive motor, the annular groove is provided to fasten a circlip, the circlip is configured to abut against the other side surface of the inner ring of the intermediate bearing in the axial direction of the drive motor, an outer diameter of the circlip is greater than an outer diameter of the second segment, and the annular groove and the second shoulder are adjacently arranged on two sides of the second segment in the axial direction of the drive motor.

In an embodiment of this application, the second shoulder and the annular groove are located on the two sides of the second segment. The cooperation between the second shoulder and the circlip accommodated in the annular groove can limit the inner ring of the intermediate bearing in the axial direction, helping reduce axial play of the intermediate bearing and the rotating shaft. Both the annular groove and the tooth portion are located on a side that is of the second segment and that faces away from the first segment. Similar to the tooth portion, the annular groove has an inner diameter that needs to be less than the outer diameter of the second segment. To ensure that the circlip abuts against the inner ring of the intermediate bearing, the outer diameter of the circlip needs to be greater than the outer diameter of the second segment.

According to a second aspect, an embodiment of this application provides an electric vehicle. The electric vehicle includes a power battery and the powertrain according to any embodiment in the first aspect. The powertrain is configured to receive power supply from the power battery and is configured to drive wheels of the electric vehicle.

In an embodiment of this application, the powertrain according to any embodiment in the first aspect is used in the electric vehicle. Because the rotating shaft of the powertrain eliminates a spline fit structure, noise generation can be reduced, and a service life of the rotating shaft can be prolonged, helping improve NVH performance and safety performance of the electric vehicle. Mounting and disassembly operations can be completed on the intermediate bearing of the powertrain together with the rotating shaft, helping reduce assembly and disassembly difficulty and costs.

### BRIEF DESCRIPTION OF DRAWINGS

To describe technical solutions in embodiments of this application more clearly, the following describes the accompanying drawings used in embodiments of this application.
FIG. 1 is a diagram of an electric vehicle according to an embodiment of this application;
FIG. 2 is a diagram of a powertrain according to an embodiment of this application;
FIG. 3 is a diagram of a powertrain according to an embodiment of this application;
FIG. 4 is a diagram of a rotating shaft according to an embodiment of this application;
FIG. 5 is a cross-sectional view of a rotating shaft according to an embodiment of this application;
FIG. 6 is a diagram of a part of a powertrain according to an embodiment of this application;
FIG. 7 is a diagram of a part of a powertrain according to an embodiment of this application; and
FIG. 8 is a cross-sectional view of a part of a powertrain according to an embodiment of this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application.

For ease of understanding, the following first explains and describes English abbreviations and related technical terms used in embodiments of this application.

NVH, an English abbreviation for noise, vibration, and harshness, is for measuring design and manufacturing quality of vehicles.

Parallel: "Parallel" defined in embodiments of this application is not limited to absolute parallelism. A definition of parallelism herein may be understood as approximate parallelism, allowing non-absolute parallelism resulting from influencing factors such as an assembly tolerance, a design tolerance, and structural flatness.

Currently, a powertrain faces problems of great difficulty in assembly and disassembly, and to-be-improved NVH performance. Embodiments of this application provide a powertrain. A housing of the powertrain includes a motor cavity and a reducer cavity. The motor cavity is provided to accommodate a motor rotor of a drive motor in the powertrain. The reducer cavity is provided to accommodate a parallel-axis gear set of a reducer in the powertrain. A rotating shaft of the drive motor extends from the motor cavity to the reducer cavity through an intermediate bearing housing in an axial direction of the drive motor.

The rotating shaft includes a first segment, a second segment, and a third segment that are sequentially arranged in the axial direction of the drive motor. The first segment is configured to fasten the motor rotor, the second segment is configured to fasten an inner ring of an intermediate bearing, the third segment has a tooth portion, and the tooth portion is configured to engage with an intermediate driven gear in the parallel-axis gear set. The rotating shaft of the drive motor is in a transmission connection with the parallel-axis gear set by the tooth portion. The first segment is located in the motor cavity, and the third segment is located in the reducer cavity.

An inner circumferential wall of the intermediate bearing housing is configured to fasten an outer ring of the intermediate bearing, and a bottom of the intermediate bearing housing is configured to abut against the outer ring of the intermediate bearing in the axial direction of the drive motor. An opening of the intermediate bearing housing faces away from the reducer cavity in the axial direction of the drive motor.

In embodiments of this application, the rotating shaft of the drive motor has the tooth portion. A function of an input shaft of the reducer is integrated into the rotating shaft of the drive motor, so that problems of great difficulty in assembly and disassembly, noise, and potential failure caused by a spline fit between the rotating shaft and the input shaft can be avoided. In addition, the opening of the intermediate bearing housing faces away from the reducer cavity, so that mounting and disassembly operations can be completed on the intermediate bearing together with the rotating shaft, helping reduce assembly and disassembly difficulty and costs. The powertrain provided in embodiments of this application may be used in an electric vehicle.

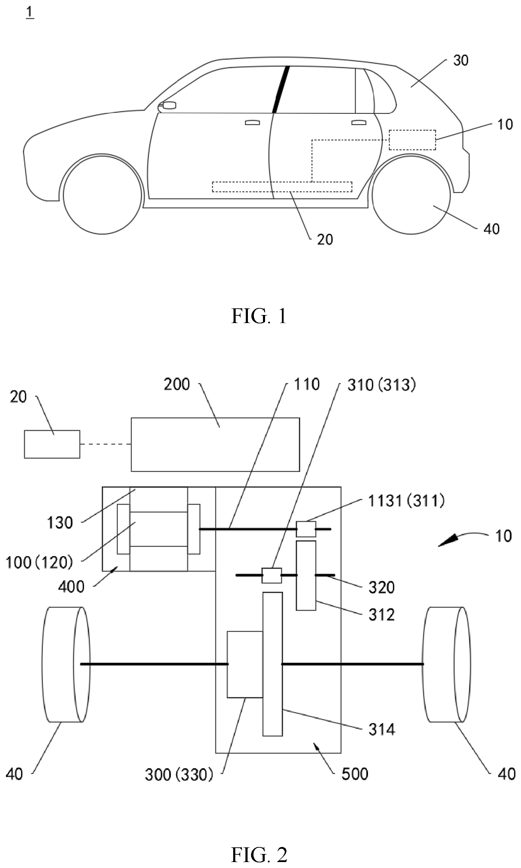

FIG. 1 is a diagram of an electric vehicle 1 according to an embodiment of this application. In an embodiment, the electric vehicle 1 includes a powertrain 10 and a power battery 20. In an embodiment of this application, the electric vehicle 1 is a wheeled device driven or powered by a power apparatus. The power battery 20 is configured to supply power to the powertrain 10. The power battery 20 may also be referred to as a battery pack. The powertrain 10 is a power source of the electric vehicle 1. The powertrain 10 is configured to drive wheels 40 of the electric vehicle 1. In an embodiment, the electric vehicle 1 further includes a frame 30, and the frame 30 is configured to mount the powertrain 10 and the power battery 20. The frame 30 is a structural framework of the electric vehicle 1, and can bear loads on the electric vehicle 1 from internal and external environments.

FIG. 2 is a diagram of the powertrain 10 according to an embodiment of this application. In an embodiment, the powertrain 10 includes a drive motor 100, a motor control unit 200, and a reducer 300. The power battery is configured to supply power to the drive motor 100 by using the motor control unit 200. Specifically, the motor control unit 200 is configured to convert a direct current provided by the power battery into an alternating current, and transmit the alternating current to the drive motor 100. The drive motor 100 is in a transmission connection with the reducer 300 to drive the wheels to rotate. In an embodiment, the motor control unit 200 is configured to control the drive motor 100 and the reducer 300. It should be noted that FIG. 2 merely shows an example in which there is an electrical connection relationship between the motor control unit 200 of the powertrain 10 and the power battery 20, and there is a transmission relationship between the drive motor 100 and the reducer 300 of the powertrain 10, but does not indicate actual structures, sizes, and position relationships of the powertrain 10, the power battery 20, and the wheels 40.

The drive motor 100 is configured to convert electric energy into mechanical energy, to generate driving torque. In an embodiment, the drive motor 100 includes a rotating shaft 110, a motor rotor 120, and a motor stator 130. A winding of the motor stator 130 generates alternating magnetic flux after an alternating current is applied. The alternating magnetic flux generated by the winding interacts with permanent magnet flux generated by the motor rotor 120, so that the motor rotor 120 rotates relative to the motor stator 130. The motor rotor 120 is fastened to the rotating shaft 110, so that the rotating shaft 110 rotates with the motor rotor 120. The motor stator 130 is rotatably connected to the rotating shaft 110, so that the rotating shaft 110 can rotate relative to the motor stator 130, to convert electric energy into mechanical energy. The rotating shaft 110 is configured to transfer mechanical energy to the reducer 300.

The reducer 300 is configured to change a transmission ratio between the drive motor 100 and the wheels. In an embodiment, the reducer 300 includes a parallel-axis gear set 310, an intermediate shaft 320, and a differential 330. The parallel-axis gear set 310 includes an input gear 311, an intermediate driven gear 312, an intermediate driving gear 313, and an output gear 314. The intermediate driven gear 312 and the intermediate driving gear 313 are fastened to the intermediate shaft 320, and the output gear 314 is fastened to the differential 330. The rotating shaft 110 of the drive motor 100 is configured to transmit torque to the input gear 311, and the input gear 311 is configured to engage with the intermediate driven gear 312. The intermediate driven gear 312 is configured to drive the intermediate shaft 320 and the intermediate driving gear 313 to rotate. The intermediate driving gear 313 is configured to engage with the output gear 314, and the output gear 314 is configured to drive the differential 330 to rotate. The differential 330 is configured to transmit torque to drive axle shafts, to drive the wheels to rotate, to enable the electric vehicle to move forward or move backward.

Currently, the powertrain usually implements mechanical energy transfer between a motor shaft of the drive motor and the input gear by using an input shaft of the reducer, and the input shaft and the motor shaft of the drive motor implement a transmission connection through a spline fit. However, the spline fit leads to great difficulty in assembly and disassembly and is likely to cause an adverse impact on NVH performance of the powertrain, and splines also face a risk of failure due to fretting wear. This is not conducive to improving operation efficiency and safety performance of the powertrain and the electric vehicle.

In embodiments of this application, a structure for the transmission connection between the drive motor and the reducer is improved, so that an adverse impact of the spline fit on the powertrain can be avoided, helping improve NVH performance of the electric vehicle.

The following describes in detail the powertrain 10 provided in implementations of this application.

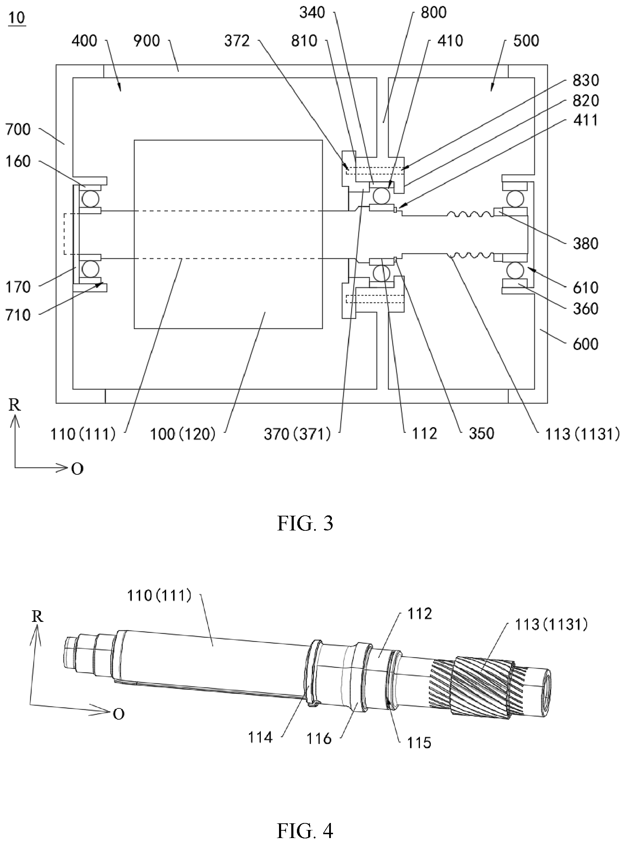

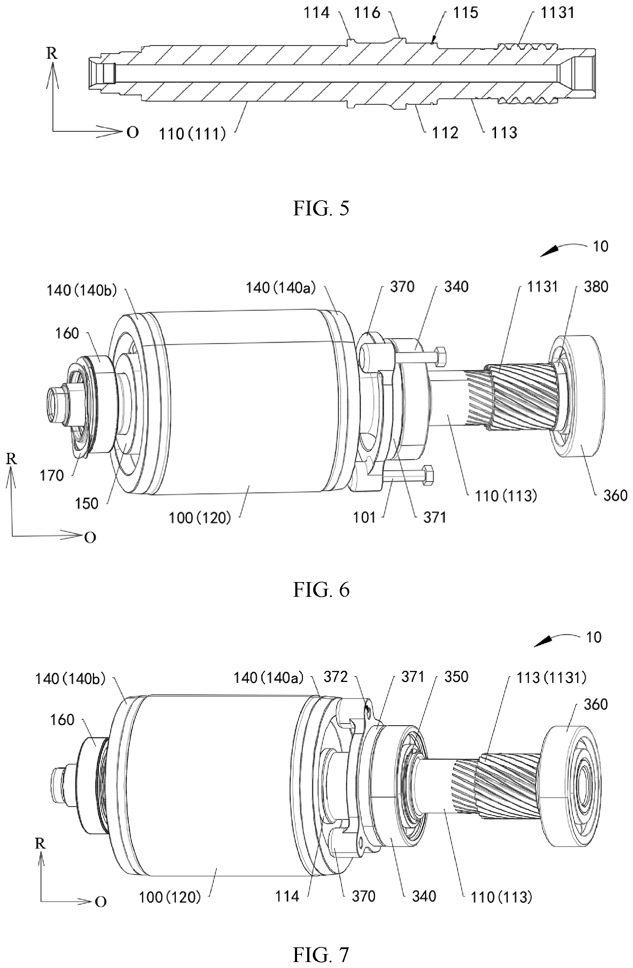

Refer to FIG. 2 to FIG. 5. FIG. 3 is a diagram of the powertrain 10 according to an embodiment of this application. FIG. 4 is a diagram of the rotating shaft 110 according to an embodiment of this application. FIG. 5 is a cross-sectional view of the rotating shaft 110 according to an embodiment of this application.

In an embodiment, a housing of the powertrain 10 includes a motor cavity 400 and a reducer cavity 500, the motor cavity 400 is provided to accommodate a motor rotor 120 of the drive motor 100 in the powertrain 10, and the reducer cavity 500 is provided to accommodate a parallel-axis gear set 310 of the reducer 300 in the powertrain 10. The rotating shaft 110 of the drive motor 100 extends from the motor cavity 400 to the reducer cavity 500 through an intermediate bearing housing 410 in an axial direction O of the drive motor 100.

The rotating shaft 110 includes a first segment 111, a second segment 112, and a third segment 113 that are sequentially arranged in the axial direction O of the drive motor 100. The first segment 111 is configured to fasten the motor rotor 120, the second segment 112 is configured to fasten an inner ring of an intermediate bearing 340, the third segment 113 has a tooth portion 1131, and the tooth portion 1131 is configured to engage with an intermediate driven gear 312 in the parallel-axis gear set 310. The first segment 111 is located in the motor cavity 400, and the third segment 113 is located in the reducer cavity 500.

An inner circumferential wall of the intermediate bearing housing 410 is configured to fasten an outer ring of the intermediate bearing 340, and a bottom of the intermediate bearing housing 410 is configured to abut against the outer ring of the intermediate bearing 340 in the axial direction O of the drive motor 100. An opening of the intermediate bearing housing 410 faces away from the reducer cavity 500 in the axial direction O of the drive motor 100.

In an embodiment of this application, to avoid existing problems of complex assembly and disassembly, noise, and fretting wear caused by a spline fit between a motor shaft and an input shaft, in this embodiment of this application, based on the rotating shaft 110 of the drive motor 100, a function of the input shaft is integrated into the rotating shaft 110, that is, the rotating shaft 110 is used to replace an existing combination of the motor shaft and the input shaft.

Specifically, the rotating shaft 110 extends from the motor cavity 400 to the reducer cavity 500, the first segment 111 of the rotating shaft 110 is located in the motor cavity 400, and the third segment 113 of the rotating shaft 110 is located in the reducer cavity 500, providing a prerequisite for integrating the function of the input shaft into the rotating shaft 110. The first segment 111 is configured to fasten the motor rotor 120, so that the rotating shaft 110 can directly receive torque transmitted by the motor rotor 120, functioning as the motor shaft. The third segment 113 has the tooth portion 1131, and the tooth portion 1131 is configured to engage with the intermediate driven gear 312. In other words, the tooth portion 1131 serves as an input gear 311 to be in a transmission connection with the reducer 300, so that the rotating shaft 110 can further transmit torque directly to the reducer 300. Because the rotating shaft 110 eliminates a spline fit structure, in embodiments of this application, difficulty in assembly and disassembly can be reduced, noise generated by the rotating shaft 110 can be reduced, NVH performance can be improved, and a risk of failure of a transmission connection between the rotating shaft 110 and the reducer 300 can be reduced, prolonging a service life of the rotating shaft 110.

In an embodiment of this application, in addition to the first segment 111 and the third segment 113, the rotating shaft 110 further includes the second segment 112. The second segment 112 is configured to fasten the inner ring of the intermediate bearing 340, the intermediate bearing housing 410 is configured to fasten the outer ring of the intermediate bearing 340, and the intermediate bearing 340 is for supporting the rotating shaft 110. The rotating shaft 110 integrates the first segment 111, the second segment 112, and the tooth portion 1131, and the first segment 111, the second segment 112, and the tooth portion 1131 may be machined integrally, to meet a coaxiality requirement. The rotating shaft 110 does not need to reserve space for a spline fit, leading to high integration, and reducing an axial size of the rotating shaft 110. This helps implement miniaturization design of the powertrain 10.

In an embodiment of this application, the rotating shaft 110 extends from the motor cavity 400 to the reducer cavity 500 through the intermediate bearing housing 410. During mounting and disassembly of the rotating shaft 110, an orientation of the opening of the intermediate bearing housing 410 affects assembly and disassembly difficulty and costs.

Specifically, if the opening of the intermediate bearing housing 410 faces the reducer cavity 500, the rotating shaft 110 passes sequentially through the bottom and the opening of the intermediate bearing housing 410 during mounting, and then the intermediate bearing 340 cannot be fastened to the rotating shaft 110 in advance. If the intermediate bearing 340 is fastened to the rotating shaft 110 in advance, the intermediate bearing 340 is obstructed by the bottom of the intermediate bearing housing 410. Therefore, the intermediate bearing 340 can only be fastened to the intermediate bearing housing 410 first. In this case, the rotating shaft 110 needs to pass through the inner ring of the intermediate bearing 340 during mounting, potentially causing collision. Usually, the rotating shaft 110 and the motor rotor 120 are fastened and then mounted together. During mounting, a position of the intermediate bearing 340 is obstructed by the rotating shaft 110 and the motor rotor 120, increasing difficulty in ensuring coaxiality. In addition, during disassembly of the rotating shaft 110, due to obstruction by the bottom of the intermediate bearing housing 410, the intermediate bearing 340 cannot be removed together with the rotating shaft 110. Therefore, the intermediate bearing 340 can only be separated from the rotating shaft 110 first, potentially causing damage to the intermediate bearing 340 during separation.

To reduce assembly and disassembly difficulty and costs of the powertrain, in an embodiment of this application, when the rotating shaft 110 integrates the first segment 111, the second segment 112, and the third segment 113, the opening of the intermediate bearing housing 410 is adjusted to face away from the reducer cavity 500 in the axial direction O of the drive motor 100. During mounting of the rotating shaft 110, the intermediate bearing 340 may be fastened to the second segment 112 of the rotating shaft 110 in advance, so that a mounting operation can be completed on the intermediate bearing 340 and the rotating shaft 110 together. Compared with a mounting manner in which the rotating shaft 110 passes through the inner ring of the intermediate bearing 340 during mounting, an embodiment of this application, in which the rotating shaft 110 and the intermediate bearing 340 together pass through the opening of the intermediate bearing housing 410 until the outer ring of the intermediate bearing 340 abuts against the bottom of the intermediate bearing housing 410, helps simplify an assembly process, and can avoid collision between the intermediate bearing 340 and the rotating shaft 110. In addition, during disassembly of the rotating shaft 110, because the intermediate bearing 340 cannot be obstructed by the bottom of the intermediate bearing housing 410, the intermediate bearing 340 and the rotating shaft 110 can be removed as a whole. This helps reduce damage to the intermediate bearing 340, improving a service life of the rotating shaft 110 and the intermediate bearing 340.

It should be noted that FIG. 3 merely shows an example of integration of the first segment 111, the second segment 112, and the third segment 113 into the rotating shaft 110, and an orientation of the opening of the intermediate bearing housing 410, but does not indicate actual structures and sizes of the rotating shaft 110, the intermediate bearing 340, and the intermediate bearing housing 410.

In an embodiment, a mounting direction and a disassembly direction of the rotating shaft 110 are parallel to a gravity direction.

In an embodiment, the rotating shaft 110 is a hollow shaft, and a shaft cavity of the rotating shaft 110 may be configured to transmit cooling oil, to implement cooling of the drive motor 100 and lubrication of the reducer 300.

In an embodiment, the shaft cavity of the rotating shaft 110 is further configured to accommodate a conductive bearing, and the conductive bearing is configured to transfer a shaft current on the rotating shaft 110 to the housing of the powertrain 10, to implement grounding of the rotating shaft.

Still refer to FIG. 3. In an embodiment, the bottom of the intermediate bearing housing 410 includes a through bearing housing hole 411 in the axial direction O of the drive motor 100, the rotating shaft 110 passes through the bearing housing hole 411 and extends to the reducer cavity 500, an inner diameter of the bearing housing hole 411 is less than an outer diameter of the outer ring of the intermediate bearing 340, and the inner diameter of the bearing housing hole 411 is less than an inner diameter of the opening of the intermediate bearing housing 410.

In an embodiment of this application, the bottom of the intermediate bearing housing 410 includes the bearing housing hole 411, the bearing housing hole 411 passes through the bottom of the intermediate bearing housing 410 in the axial direction O of the drive motor 100, and the third segment 113 of the rotating shaft 110 passes through the bearing housing hole 411 and extends to the reducer cavity 500. Because the bottom of the intermediate bearing housing 410 needs to abut against a side surface of the intermediate bearing 340 in the axial direction O of the drive motor 100, the inner diameter of the bearing housing hole 411 located at the bottom of the intermediate bearing housing 410 needs to be less than the outer diameter of the outer ring of the intermediate bearing 340. The inner diameter of the opening of the intermediate bearing housing 410 is greater than the inner diameter of the bearing housing hole 411, facilitating the rotating shaft 110 and the intermediate bearing 340 to pass through the opening of the intermediate bearing housing 410, and preventing obstruction in assembly and disassembly of the rotating shaft 110 and the intermediate bearing 340.

It should be noted that FIG. 3 merely shows an example of a magnitude relationship among the inner diameter of the bearing housing hole 411, the outer diameter of the intermediate bearing 340, and the inner diameter of the opening of the intermediate bearing housing 410, but does not indicate actual sizes and structures of the bearing housing hole 411, the intermediate bearing 340, and the intermediate bearing housing 410.

Still refer to FIG. 3. In an embodiment, the inner diameter of the bearing housing hole 411 is greater than an outer diameter of the tooth portion 1131.

In an embodiment of this application, during mounting of the rotating shaft 110, the tooth portion 1131 of the rotating shaft 110 passes through the bearing housing hole 411 of the intermediate bearing housing 410 before the second segment 112 does. If the outer diameter of the tooth portion 1131 is greater than the inner diameter of the bearing housing hole 411, the tooth portion 1131 cannot pass through the bearing housing hole 411, hindering mounting and disassembly of the rotating shaft 110 and the intermediate bearing 340.

In an existing solution of a spline fit between a motor shaft and an input shaft, the motor shaft and the input shaft may be mounted sequentially in two opposite directions, so that a problem that an input gear of the input shaft hinders mounting of the motor shaft and the input shaft can be avoided. In an embodiment of this application, the tooth portion 1131 is integrated into the third segment 113 of the rotating shaft 110, and the third segment 113 of the rotating shaft 110 extends to the reducer cavity 500. Different from the existing solution, to apply the rotating shaft 110 to the powertrain 10, this embodiment needs to avoid an influencing factor that interferes with mounting of the rotating shaft 110. Therefore, in an embodiment of this application, the outer diameter of the tooth portion 1131 is adjusted to be less than the inner diameter of the bearing housing hole 411. This facilitates reducing interference with mounting of the rotating shaft 110 by the tooth portion 1131, reducing mounting difficulty and costs of the rotating shaft 110.

It should be noted that FIG. 3 merely shows an example of a magnitude relationship between the inner diameter of the bearing housing hole 411 and the outer diameter of the tooth portion 1131, but does not indicate an actual size and structure of the tooth portion 1131.

In an embodiment, a ratio of the inner diameter of the bearing housing hole 411 to the outer diameter of the tooth portion 1131 is greater than or equal to 1.6.

In an embodiment of this application, the motor rotor 120 is fastened to the first segment 111 of the rotating shaft 110, and the motor rotor 120 is usually mounted together with the rotating shaft 110. An outer diameter of the motor rotor 120 is greater than the outer diameter of the outer ring of the intermediate bearing 340. During mounting, the motor rotor 120 with a large outer diameter may obstruct an operator's view. Therefore, in an embodiment of this application, the ratio of the inner diameter of the bearing housing hole 411 to the outer diameter of the tooth portion 1131 is adjusted to be greater than or equal to 1.6, so that a risk of collision between the tooth portion 1131 of the rotating shaft 110 and the bearing housing hole 411 during mounting can be reduced.

Still refer to FIG. 3. In an embodiment, the inner diameter of the bearing housing hole 411 is greater than an outer diameter of the inner ring of the intermediate bearing 340.

In an embodiment of this application, the inner ring of the intermediate bearing 340 is fastened to the rotating shaft 110. When the powertrain 10 is in an operating state, the inner ring of the intermediate bearing 340 rotates at a high speed with the rotating shaft 110 relative to the intermediate bearing housing 410. If the inner diameter of the bearing housing hole 411 is less than or equal to the outer diameter of the inner ring of the intermediate bearing 340, the bottom of the intermediate bearing housing 410 abuts against the outer ring of the intermediate bearing 340, and is further configured to abut against the inner ring of the intermediate bearing 340, potentially causing friction between the inner ring of the intermediate bearing 340 and the intermediate bearing housing 410. In an embodiment of this application, a magnitude relationship between the inner diameter of the bearing housing hole and the outer diameter of the inner ring of the intermediate bearing 340 is adjusted. This helps reduce wear on the intermediate bearing 340 and the intermediate bearing housing 410, improving a service life of the intermediate bearing 340 and the intermediate bearing housing 410.

Still refer to FIG. 3. In an embodiment, the housing of the powertrain 10 includes an intermediate separator plate 800, the intermediate separator plate 800 is located between the motor cavity 400 and the reducer cavity 500 in the axial direction O of the drive motor 100, and the intermediate bearing housing 410 is located on the intermediate separator plate 800. The intermediate separator plate 800 is configured to fasten a pressing plate 370, in the axial direction O of the drive motor 100, the pressing plate 370 is located on a side that is of the intermediate bearing 340 and that faces away from the tooth portion 1131, and the pressing plate 370 is configured to abut against the intermediate separator plate 800 and the outer ring of the intermediate bearing 340.

In an embodiment of this application, the intermediate separator plate 800 is configured to separate the motor cavity 400 and the reducer cavity 500, and the intermediate bearing housing 410 is located on the intermediate separator plate 800. In the axial direction O of the drive motor 100, the opening of the intermediate bearing housing 410 faces away from the reducer cavity 500, and the outer ring of the intermediate bearing 340 faces a side surface of the bottom of the intermediate bearing housing 410 and abuts against the intermediate bearing housing 410. The pressing plate 370 is located on a side that is of the intermediate bearing 340 and that faces away from the tooth portion 1131. The cooperation between the pressing plate 370 and the bottom of the intermediate bearing housing 410 allows two side surfaces of the outer ring of the intermediate bearing 340 to be fastened in the axial direction O of the drive motor 100. The pressing plate 370 is further configured to abut against the intermediate separator plate 800, for the intermediate separator plate 800 to fasten the pressing plate 370.

In an embodiment of this application, the pressing plate 370 can further avoid a creep failure of the outer ring of the intermediate bearing 340. The inner ring of the intermediate bearing 340 is fastened to the rotating shaft 110, and the outer ring of the intermediate bearing 340 is fastened to the intermediate bearing housing 410. When the inner ring of the intermediate bearing 340 rotates at a high speed with the rotating shaft 110, a rolling body located between the inner ring and the outer ring of the intermediate bearing 340 may drive the outer ring of the intermediate bearing 340 to slide relative to the intermediate bearing housing 410, causing outer ring creep of the intermediate bearing 340. In an embodiment of this application, when the rotating shaft 110 integrates the first segment 111, the second segment 112, and the third segment 113, the pressing plate 370 abuts against the outer ring of the intermediate bearing 340, so that the outer ring of the intermediate bearing 340 can be limited in the axial direction. This helps reduce damage to the intermediate bearing 340 and the intermediate bearing housing 410, increasing a service life and reliability of the intermediate bearing 340.

It should be noted that FIG. 3 merely shows an example of relative positions of the pressing plate 370 and the intermediate bearing housing 410, and use of the pressing plate 370 to abut against the intermediate separator plate 800 and the outer ring of the intermediate bearing 340. For clear illustration, the pressing plate 370 is simplified. This does not indicate an actual structure and size of the pressing plate 370.

Refer to FIG. 3, FIG. 6, and FIG. 7. FIG. 6 is a diagram of a part of the powertrain 10 according to an embodiment of this application. FIG. 7 is a diagram of a part of the powertrain 10 according to an embodiment of this application. In an embodiment, the intermediate separator plate 800 includes a first surface 810, a second surface 820, and a first fixed hole 830, the first surface 810 and the second surface 820 respectively face the motor cavity 400 and the reducer cavity 500 in the axial direction O of the drive motor 100, the first fixed hole 830 passes through the first surface 810 and the second surface 820, and the pressing plate 370 includes a second fixed hole 372. The first fixed hole 830 and the second fixed hole 372 are opposite to each other in the axial direction O of the drive motor 100, one end of a fastener 101 of the powertrain 10 extends from the second surface 820 to the second fixed hole 372 through the first fixed hole 830 in the axial direction O of the drive motor 100, and the other end of the fastener 101 is located in the reducer cavity 500.

In an embodiment of this application, after the intermediate bearing 340 is mounted to the intermediate bearing housing 410, the fastener 101 passes through the first fixed hole 830 and the second fixed hole 372 to fasten the pressing plate 370 to the intermediate separator plate 800, to limit the outer ring of the intermediate bearing 340 in the axial direction. The motor rotor 120, the intermediate bearing 340, and the rotating shaft 110 enter the motor cavity 400 together. In the axial direction O of the drive motor 100, the first surface 810 and the second surface 820 of the intermediate separator plate 800 respectively face the motor cavity 400 and the reducer cavity 500. If a mounting direction of the fastener 101 is from the first surface 810 to the second surface 820, the motor rotor 120 and the rotating shaft 110 occupy some space of the motor cavity 400, making it more difficult to pass the fastener 101 through the intermediate separator plate 800 from the motor cavity 400. In an embodiment of this application, a mounting direction of the fastener 101 is opposite to a mounting direction of the intermediate bearing 340. One end of the fastener 101 passes sequentially through the second surface 820 and the first surface 810, and then extends into the second fixed hole 372, so that a structure that has been mounted in the motor cavity 400 can be avoided, helping reduce operation difficulty in fastening the pressing plate 370.

In an embodiment of this application, before disassembly of the rotating shaft 110 and the intermediate bearing 340, the pressing plate 370 and the intermediate separator plate 800 need to be separated first by using the fastener 101. Because the other end of the fastener 101 is located in the reducer cavity 500, a disassembly operation of passing the fastener 101 sequentially through the first surface 810 and the second surface 820 can be completed in the reducer cavity 500. This helps avoid structures such as the rotating shaft 110, the motor rotor 120, and the motor stator 130 in the motor cavity 400, and helps simplify a disassembly process.

In an embodiment, the intermediate separator plate 800 includes a plurality of first fixed holes 830, and the plurality of first fixed holes 830 are evenly distributed in a circumferential direction of the powertrain 10. The pressing plate 370 includes a plurality of second fixed holes 372, and the plurality of second fixed holes 372 are evenly distributed in the circumferential direction of the powertrain 10. It should be noted that a specific quantity of first fixed holes 830 and a specific quantity of second fixed holes 372 are not limited in embodiments of this application, provided that each first fixed hole 830 is opposite to one second fixed hole 372 in the axial direction O of the powertrain 10, for one fastener 101 to pass through the first fixed hole 830 and the second fixed hole 372.

In an embodiment, the fastener 101 is a screw, and the pressing plate 370 is fastened to the intermediate separator plate 800 through a screw connection.

Still refer to FIG. 3, FIG. 6, and FIG. 7. In an embodiment, the intermediate bearing 340 and the opening of the intermediate bearing housing 410 are spaced apart in the axial direction O of the drive motor 100, the pressing plate 370 includes an annular protrusion 371, the annular protrusion 371 extends from the opening of the intermediate bearing housing 410 into the intermediate bearing housing 410, an end of the annular protrusion 371 is configured to abut against the outer ring of the intermediate bearing 340 in the axial direction O of the drive motor 100, and the intermediate bearing housing 410 is configured to fasten an outer circumferential surface of the annular protrusion 371.

In an embodiment of this application, the pressing plate 370 includes the annular protrusion 371, and the end of the annular protrusion 371 and the bottom of the intermediate bearing housing 410 respectively abut against the two side surfaces of the outer ring of the intermediate bearing 340 in the axial direction O of the drive motor 100. The annular protrusion 371 of the pressing plate 370 extends into the intermediate bearing housing 410, and the annular protrusion 371 can play a role in pre-fastening the pressing plate 370. Specifically, before the rotating shaft 110 is mounted to the housing of the powertrain 10, the intermediate bearing 340 may be first mounted on the second segment 112 of the rotating shaft 110, and then the pressing plate 370 may be sleeved on the rotating shaft 110, so that the pressing plate 370 is located on a side that is of the intermediate bearing 340 and that faces away from the tooth portion 1131. After the intermediate bearing 340 is mounted to the intermediate bearing housing 410, the annular protrusion 371 of the pressing plate 370 is also embedded in the intermediate bearing housing 410, for the fastener 101 to subsequently fasten the pressing plate 370 and the intermediate separator plate 800, avoiding movement of the pressing plate 370 in a process of fastening the pressing plate 370 and the intermediate separator plate 800.

Still refer to FIG. 3. In an embodiment, the first segment 111 and the third segment 113 are respectively configured to fasten an inner ring of a motor bearing 160 and an inner ring of a reducer bearing 360, a cavity wall on a side of the reducer cavity 500 and the intermediate separator plate 800 are opposite to each other in the axial direction O of the drive motor 100, the cavity wall on the side of the reducer cavity 500 includes a reducer bearing housing 610, an inner circumferential wall of the reducer bearing housing 610 is configured to fasten an outer ring of the reducer bearing 360, and the tooth portion 1131 is adjacent to an opening of the reducer bearing housing 610. The outer ring of the reducer bearing 360 and a bottom of the reducer bearing housing 610 are spaced apart in the axial direction O of the drive motor 100.

In an embodiment of this application, in the axial direction O of the drive motor 100, the cavity wall on the side of the reducer cavity 500 is away from the motor rotor 120. As shown in FIG. 3, in an embodiment, the cavity wall on the one side of the reducer cavity 500 is a reducer end cover 600. In an embodiment of this application, a bearing fastened to the rotating shaft 110 includes the motor bearing 160, the intermediate bearing 340, and the reducer bearing 360 that are sequentially arranged in the axial direction O of the drive motor 100. In an embodiment, the inner ring of the motor bearing 160, the inner ring of the intermediate bearing 340, and the inner ring of the reducer bearing 360 form interference fits respectively with the first segment 111, the second segment 112, and the third segment 113 of the rotating shaft 110. The reducer bearing housing 610 on the reducer end cover 600 is configured to fasten the outer ring of the reducer bearing 360, and the opening of the reducer bearing housing 610 faces the tooth portion 1131 in the axial direction O of the drive motor 100.

In an embodiment of this application, because the rotating shaft 110 integrates a function of the input shaft of the reducer 300, a size and a volume of the rotating shaft 110 are both larger than those of the motor shaft. Therefore, in an embodiment of this application, a three-bearing structure is used, so that support effect on the rotating shaft 110 can be enhanced by using a plurality of bearings, reducing a risk of bending and deformation of the rotating shaft 110.

In an embodiment of this application, the rotating shaft 110 is essentially one shaft, and the three-bearing structure used on one shaft may cause an over-positioning problem. Over-positioning is a mechanical interference phenomenon in which a same degree of freedom of a workpiece is repeatedly restricted by a plurality of support points. Over-positioning caused by a three-bearing structure exacerbates bearing wear and interferes with torque transmission through the rotating shaft 110. To reduce an adverse impact of over-positioning on the rotating shaft 110 and the bearing, in an embodiment of this application, the reducer bearing 360 is spaced apart from the bottom of the reducer bearing housing 610. A gap between the reducer bearing 360 and the reducer bearing housing 610 can provide an allowance for the rotating shaft 110 to move in the axial direction O of the drive motor 100, weakening a constraint of the reducer bearing 360 on a degree of freedom of movement of the rotating shaft 110 in the axial direction O of the drive motor 100, thereby helping mitigate an axial over-positioning problem.

As shown in FIG. 3, in an embodiment, the housing of the powertrain 10 includes an intermediate housing 900, and the intermediate separator plate 800 is located in the intermediate housing 900. In the axial direction O of the drive motor 100, the reducer end cover 600 is fastened to the intermediate housing 900. The intermediate housing 900 is configured to enclose the reducer cavity 500 together with the reducer end cover 600. When a direction of an axial force generated by the parallel-axis gear set on the rotating shaft 110 is parallel to a direction from the first segment 111 to the second segment 112, the axial force is directly transmitted to the intermediate separator plate 800 through the intermediate bearing 340. In this case, because the intermediate housing 900 of the powertrain 10 already bears the axial force, the gap between the reducer bearing 360 and the reducer bearing housing 610 does not cause an adverse impact on limiting the rotating shaft 110 in the axial direction. When the direction of the axial force generated by the parallel-axis gear set on the rotating shaft 110 is parallel to a direction from the second segment 112 to the first segment 111, the axial force is transmitted to the intermediate separator plate 800 through the intermediate bearing 340 and the pressing plate 370, that is, the intermediate housing 900 is used to bear the axial force. This helps reduce axial play of the rotating shaft 110, enhancing NVH performance. An interaction force between the rotating shaft 110 and the pressing plate 370 can enhance rigidity of the rotating shaft 110 and the motor rotor 120, thereby increasing a critical rotational speed of the rotating shaft 110. In an embodiment of this application, a position relationship between the reducer bearing 360 and the bottom of the reducer bearing housing 610 is adjusted without interfering with axial limiting of the rotating shaft 110, mitigating an axial over-positioning problem.

As shown in FIG. 3, in an embodiment, the housing of the powertrain 10 includes a motor end cover 700, the reducer end cover 600 and the motor end cover 700 are located on two sides of the intermediate housing 900 in the axial direction O of the drive motor 100, and the motor end cover 700 is fastened to the intermediate housing 900 in the axial direction O of the drive motor 100. The intermediate housing 900 is configured to enclose the motor cavity 400 together with the motor end cover 700. The motor end cover 700 includes a motor bearing housing 710. An inner circumferential wall of the motor bearing housing 710 is configured to fasten an outer ring of the motor bearing 160. An opening of the motor bearing housing 710 faces the motor rotor 120 in the axial direction O of the drive motor 100.

It should be noted that FIG. 3 merely shows an example of the reducer bearing housing 610, the motor bearing housing 710, the reducer end cover 600, the motor end cover 700, and the intermediate housing 900, but does not indicate actual structures and sizes of the reducer bearing housing 610, the motor bearing housing 710, the reducer end cover 600, the motor end cover 700, and the intermediate housing 900.

In an embodiment, the motor bearing housing 710, the intermediate bearing housing 410, and the reducer bearing housing 610 are all of a groove-shaped structure.

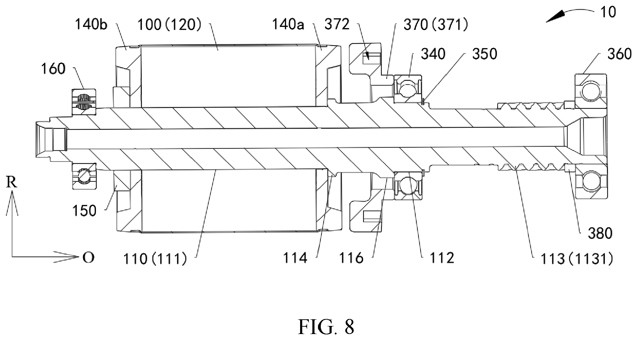

Refer to FIG. 6 to FIG. 8. FIG. 8 is a cross-sectional view of a part of the powertrain 10 according to an embodiment of this application. In an embodiment, a distance between the tooth portion 1131 and the intermediate bearing 340 is greater than a distance between the tooth portion 1131 and the reducer bearing 360 in the axial direction O of the drive motor 100, the rotating shaft 110 is further configured to fasten a first shaft sleeve 380, the first shaft sleeve 380 is configured to abut against the inner ring of the reducer bearing 360, the first shaft sleeve 380 is located between the tooth portion 1131 and the reducer bearing 360 in the axial direction O of the drive motor 100, and an outer diameter of the first shaft sleeve 380 is greater than or equal to the outer diameter of the tooth portion 1131.

In an embodiment of this application, an axial length of the tooth portion 1131 needs to adapt to a gear in the parallel-axis gear set. Therefore, the axial length of the tooth portion 1131 is usually fixed. The first shaft sleeve 380 mounted between the tooth portion 1131 and the inner ring of the reducer bearing 360 can compensate for the axial length of the tooth portion 1131, so that the inner ring of the reducer bearing 360 can be limited by the first shaft sleeve 380, reducing axial play of the reducer bearing 360 and the rotating shaft 110. The outer diameter of the first shaft sleeve 380 is greater than or equal to the outer diameter of the tooth portion 1131. This helps increase a contact area between the first shaft sleeve 380 and the inner ring of the reducer bearing 360.

In an embodiment, a radial clearance of the intermediate bearing 340 is greater than a radial clearance of at least one of the motor bearing 160 or the reducer bearing 360.

In an embodiment of this application, based on a magnitude relationship among radial clearances of the motor bearing 160, the intermediate bearing 340, and the reducer bearing 360, the intermediate bearing 340 in the radial direction R of the drive motor 100 may be used as a floating end, and the motor bearing 160 and the reducer bearing 360 may be used as fixed ends. This helps mitigate a radial over-positioning problem caused by use of a three-bearing structure on the rotating shaft 110. In an embodiment, a radial clearance of the intermediate bearing 340 is greater than a radial clearance of each of the motor bearing 160 or the reducer bearing 360. In an embodiment, a radial clearance of at least one of the reducer bearing 360 or the intermediate bearing 340 is greater than a radial clearance of the motor bearing 160.

Refer to FIG. 6 to FIG. 8. In an embodiment, the first segment 111 is further configured to fasten two end plates 140, the two end plates 140 are located on two sides of the motor rotor 120 in the axial direction O of the drive motor 100, a first shoulder 114 of the rotating shaft 110 protrudes from the first segment 111 in a radial direction R of the drive motor 100, the motor rotor 120, one end plate 140, the first shoulder 114, and the intermediate bearing housing 410 are sequentially arranged in the axial direction O of the drive motor 100, and the first shoulder 114 is configured to abut against the one end plate 140. The pressing plate 370 is located between the one end plate 140 and the intermediate bearing 340 in the axial direction O of the drive motor 100, and a length of the one end plate 140 is greater than a length of the pressing plate 370 in the radial direction R of the drive motor 100.

In an embodiment of this application, the two end plates 140 are adjacently arranged on the two sides of the motor rotor 120 in the axial direction O of the drive motor 100. In an embodiment, the two end plates 140 can play a role in achieving dynamic balance of the motor rotor 120.

In an embodiment of this application, for ease of description, one end plate 140 is denoted as an end plate 140a. In an embodiment of this application, the rotating shaft 110 includes a first shoulder 114, the outer diameter of the first shoulder 114 is greater than the outer diameter of the first segment 111, and the first shoulder 114 abuts against the end plate 140a to limit the end plate 140a and the motor rotor 120. The pressing plate 370 is located between the end plate 140a and the intermediate bearing 340 in the axial direction O of the drive motor 100. The radial length of the end plate 140a is greater than the radial length of the pressing plate 370. Before the pressing plate 370 and the intermediate separator plate 800 are fastened, the end plate 140a can limit movement of the pressing plate 370, reducing difficulty of an assembly process.

Still refer to FIG. 6 to FIG. 8. In an embodiment, the first segment 111 is further configured to fasten a second shaft sleeve 150, the second shaft sleeve 150 is configured to abut against the other end plate 140 in the axial direction O of the drive motor 100 to fasten the motor rotor 120 and the two end plates 140, the second shaft sleeve 150 is located on a side that is of the other end plate 140 and that faces away from the pressing plate 370, and an outer diameter of the second shaft sleeve 150 is greater than an outer diameter of the first shoulder 114.

In an embodiment of this application, for ease of description, the other end plate 140 is denoted as an end plate 140b. The second shaft sleeve 150 and the first shoulder 114 are respectively configured to abut against the end plate 140b and the end plate 140a. The cooperation between the second shaft sleeve 150 and the first shoulder 114 can fasten the motor rotor 120 and the two end plates 140 tightly, reducing axial play of the motor rotor 120.

In an embodiment of this application, the second shaft sleeve 150 and the rotating shaft 110 are of separate structures. Compared with the first shoulder 114, the second shaft sleeve 150 may be adjusted in position relative to the rotating shaft 110, the motor rotor 120, and the end plate 140b. The second shaft sleeve 150 with a relatively large outer diameter helps increase a contact area between the second shaft sleeve 150 and the end plate 140b, enhancing stability of a fixed connection between the motor rotor 120 and the rotating shaft 110 and a fixed connection between the two end plates 140 and the rotating shaft 110. Because the second shaft sleeve 150 is located on a side that is of the end plate 140b and that faces away from the pressing plate 370, a large outer diameter of the second shaft sleeve 150 does not interfere with mounting of the rotating shaft 110, the intermediate bearing 340, and the pressing plate 370.

Refer to FIG. 3 and FIG. 8. In an embodiment, a second shoulder 116 of the rotating shaft 110 protrudes from the second segment 112 in the radial direction R of the drive motor 100, the second shoulder 116 is configured to abut against one side surface of the inner ring of the intermediate bearing 340 in the axial direction O of the drive motor 100, in the axial direction O of the drive motor 100, the second shoulder 116 is located on a side that is of the second segment 112 and that faces away from the tooth portion 1131, and a part of the second shoulder 116 is located in the intermediate bearing housing 410.

In an embodiment of this application, the second shoulder 116 is configured to abut against one side surface of the intermediate bearing 340 in the axial direction O of the drive motor 100, so that axial play of the intermediate bearing 340 relative to the second shoulder 116 can be reduced. This helps reduce wear on the rotating shaft 110 and the intermediate bearing 340, improving operation efficiency of the powertrain 10.

In an embodiment of this application, from a perspective of avoiding interference with mounting of the rotating shaft 110, because an outer diameter of the second shoulder 116 is greater than the outer diameter of the second segment 112, the second shoulder 116 needs to be arranged on a side that is of the second segment 112 and that faces away from the tooth portion 1131, so that the second shoulder 116 can be prevented from hindering a mounting operation of fastening the intermediate bearing 340 to the rotating shaft 110 in advance.

In an embodiment of this application, because the intermediate bearing housing 410 needs to accommodate the annular protrusion 371 of the pressing plate 370, an axial length of the intermediate bearing housing 410 needs to be greater than an axial length of the intermediate bearing 340. To make the second shoulder 116 abut against the inner ring of the intermediate bearing 340, a part of the second shoulder 116 is located in the intermediate bearing housing 410, so that an excessively large axial length of the second shoulder 116 can be avoided.

Still refer to FIG. 5, FIG. 7, and FIG. 8. In an embodiment, an annular groove 115 of the rotating shaft 110 is recessed from the second segment 112 in the radial direction R of the drive motor 100, the annular groove 115 is provided to fasten a circlip 350, the circlip 350 is configured to abut against the other side surface of the inner ring of the intermediate bearing 340 in the axial direction O of the drive motor 100, an outer diameter of the circlip 350 is greater than an outer diameter of the second segment 112, and the annular groove 115 and the second shoulder 116 are adjacently arranged on two sides of the second segment 112 in the axial direction O of the drive motor 100.

In an embodiment of this application, the second shoulder 116 and the annular groove 115 are located on the two sides of the second segment 112. The cooperation between the second shoulder 116 and the circlip 350 accommodated in the annular groove 115 can limit the inner ring of the intermediate bearing 340 in the axial direction, helping reduce axial play of the intermediate bearing 340 and the rotating shaft 110. Both the annular groove 115 and the tooth portion 1131 are located on a side that is of the second segment 112 and that faces away from the first segment 111. Similar to the tooth portion 1131, the annular groove 115 has an inner diameter that needs to be less than the outer diameter of the second segment 112. To ensure that the circlip 350 abuts against the inner ring of the intermediate bearing 340, the outer diameter of the circlip 350 needs to be greater than the outer diameter of the second segment 112. In an embodiment, the circlip 350 may be mounted into the annular groove 115 after the rotating shaft 110 and the intermediate bearing 340 are mounted.

The following describes a method for mounting the powertrain provided in embodiments of this application.

The motor stator is mounted into the motor cavity by shrink-fitting, so that the motor stator is fastened to the cavity wall of the motor cavity. After the reducer cavity is heated, outer rings of tapered roller bearings of the intermediate shaft and the differential are mounted. The intermediate bearing is press-fitted to the second segment of the rotating shaft, and the pressing plate is sleeved between the first shoulder and the intermediate bearing on the rotating shaft. The motor rotor, the two end plates, the second shaft sleeve, the motor bearing, and a resolver rotor are press-fitted to the first segment of the rotating shaft, and the conductive bearing is press-fitted to the shaft cavity of the rotating shaft. The rotating shaft is mounted into the motor cavity from the drive motor side. The intermediate bearing is press-fitted using tooling until the intermediate bearing is fully attached to the bottom of the intermediate bearing housing. The fastener is tightened from the reducer side to fasten the pressing plate to the intermediate separator plate. The circlip is mounted into the annular groove. The first shaft sleeve and the reducer side bearing are mounted to the third segment of the rotating shaft. A wave shim is mounted into the motor bearing housing, the motor end cover and the motor cavity are assembled, and a resolver stator is mounted to the motor end cover. A shim is mounted into the reducer bearing housing on the reducer end cover. The intermediate shaft and the differential with the tapered roller bearings are mounted into the reducer cavity, and the reducer end cover and the reducer cavity are assembled.

The foregoing describes in detail the powertrain and the electric vehicle provided in embodiments of this application. The principles and embodiments in this application are described in this specification by using specific examples. The descriptions about embodiments are merely provided to help understand the method in this application and core ideas thereof. In addition, a person of ordinary skill in the art may make modifications to the specific embodiments and the application scope based on the idea of this application. In conclusion, the content of this specification shall not be construed as a limitation on this application.

## Claims

1. A powertrain, wherein a housing of the powertrain comprises a motor cavity and a reducer cavity, the motor cavity is provided to accommodate a motor rotor of a drive motor in the powertrain, the reducer cavity is provided to accommodate a parallel-axis gear set of a reducer in the powertrain, and a rotating shaft of the drive motor extends from the motor cavity to the reducer cavity through an intermediate bearing housing in an axial direction of the drive motor;
the rotating shaft comprises a first segment, a second segment, and a third segment that are sequentially arranged in the axial direction of the drive motor, the first segment is configured to fasten the motor rotor, the second segment is configured to fasten an inner ring of an intermediate bearing, the third segment has a tooth portion, the tooth portion is configured to engage with an intermediate driven gear in the parallel-axis gear set, the first segment is located in the motor cavity, and the third segment is located in the reducer cavity; and
an inner circumferential wall of the intermediate bearing housing is configured to fasten an outer ring of the intermediate bearing, a bottom of the intermediate bearing housing is configured to abut against the outer ring of the intermediate bearing in the axial direction of the drive motor, and an opening of the intermediate bearing housing faces away from the reducer cavity in the axial direction of the drive motor.

2. The powertrain according to claim 1, wherein the bottom of the intermediate bearing housing comprises a through bearing housing hole in the axial direction of the drive motor, the rotating shaft passes through the bearing housing hole and extends to the reducer cavity, an inner diameter of the bearing housing hole is less than an outer diameter of the outer ring of the intermediate bearing, and the inner diameter of the bearing housing hole is less than an inner diameter of the opening of the intermediate bearing housing.

3. The powertrain according to claim 2, wherein the inner diameter of the bearing housing hole is greater than an outer diameter of the tooth portion.

4. The powertrain according to claim 3, wherein a ratio of the inner diameter of the bearing housing hole to the outer diameter of the tooth portion is greater than or equal to 1.6.

5. The powertrain according to any one of claims 1 to 4, wherein the housing of the powertrain comprises an intermediate separator plate, the intermediate separator plate is located between the motor cavity and the reducer cavity in the axial direction of the drive motor, and the intermediate bearing housing is located on the intermediate separator plate, wherein
the intermediate separator plate is configured to fasten a pressing plate, in the axial direction of the drive motor, the pressing plate is located on a side that is of the intermediate bearing and that faces away from the tooth portion, and the pressing plate is configured to abut against the intermediate separator plate and the outer ring of the intermediate bearing.

6. The powertrain according to claim 5, wherein the intermediate separator plate comprises a first surface, a second surface, and a first fixed hole, the first surface and the second surface respectively face the motor cavity and the reducer cavity in the axial direction of the drive motor, the first fixed hole passes through the first surface and the second surface, and the pressing plate comprises a second fixed hole, wherein
the first fixed hole and the second fixed hole are opposite to each other in the axial direction of the drive motor, one end of a fastener of the powertrain extends from the second surface to the second fixed hole through the first fixed hole in the axial direction of the drive motor, and the other end of the fastener is located in the reducer cavity.

7. The powertrain according to claim 5, wherein the intermediate bearing and the opening of the intermediate bearing housing are spaced apart in the axial direction of the drive motor, the pressing plate comprises an annular protrusion, the annular protrusion extends from the opening of the intermediate bearing housing into the intermediate bearing housing, an end of the annular protrusion is configured to abut against the outer ring of the intermediate bearing in the axial direction of the drive motor, and the intermediate bearing housing is configured to fasten an outer circumferential surface of the annular protrusion.

8. The powertrain according to any one of claims 5 to 7, wherein the first segment and the third segment are respectively configured to fasten an inner ring of a motor bearing and an inner ring of a reducer bearing, a cavity wall on a side of the reducer cavity and the intermediate separator plate are opposite to each other in the axial direction of the drive motor, the cavity wall on the side of the reducer cavity comprises a reducer bearing housing, an inner circumferential wall of the reducer bearing housing is configured to fasten an outer ring of the reducer bearing, and the tooth portion is adjacent to an opening of the reducer bearing housing, wherein
the outer ring of the reducer bearing and a bottom of the reducer bearing housing are spaced apart in the axial direction of the drive motor.

9. The powertrain according to claim 8, wherein a distance between the tooth portion and the intermediate bearing is greater than a distance between the tooth portion and the reducer bearing in the axial direction of the drive motor, the rotating shaft is further configured to fasten a first shaft sleeve, the first shaft sleeve is configured to abut against the inner ring of the reducer bearing, the first shaft sleeve is located between the tooth portion and the reducer bearing in the axial direction of the drive motor, and an outer diameter of the first shaft sleeve is greater than or equal to the outer diameter of the tooth portion.

10. The powertrain according to claim 8, wherein a radial clearance of the intermediate bearing is greater than a radial clearance of at least one of the motor bearing or the reducer bearing.

11. The powertrain according to any one of claims 5 to 10, wherein the first segment is further configured to fasten two end plates, the two end plates are located on two sides of the motor rotor in the axial direction of the drive motor, a first shoulder of the rotating shaft protrudes from the first segment in a radial direction of the drive motor, the motor rotor, one end plate, the first shoulder, and the intermediate bearing housing are sequentially arranged in the axial direction of the drive motor, and the first shoulder is configured to abut against the one end plate, wherein
the pressing plate is located between the one end plate and the intermediate bearing in the axial direction of the drive motor, and a length of the one end plate is greater than a length of the pressing plate in the radial direction of the drive motor.

12. The powertrain according to claim 11, wherein the first segment is further configured to fasten a second shaft sleeve, the second shaft sleeve is configured to abut against the other end plate in the axial direction of the drive motor to fasten the motor rotor and the two end plates, the second shaft sleeve is located on a side that is of the other end plate and that faces away from the pressing plate, and an outer diameter of the second shaft sleeve is greater than an outer diameter of the first shoulder.

13. The powertrain according to any one of claims 1 to 12, wherein a second shoulder of the rotating shaft protrudes from the second segment in the radial direction of the drive motor, the second shoulder is configured to abut against one side surface of the inner ring of the intermediate bearing in the axial direction of the drive motor, in the axial direction of the drive motor, the second shoulder is located on a side that is of the second segment and that faces away from the tooth portion, and a part of the second shoulder is located in the intermediate bearing housing.

14. The powertrain according to claim 13, wherein an annular groove of the rotating shaft is recessed from the second segment in the radial direction of the drive motor, the annular groove is provided to fasten a circlip, the circlip is configured to abut against the other side surface of the inner ring of the intermediate bearing in the axial direction of the drive motor, an outer diameter of the circlip is greater than an outer diameter of the second segment, and the annular groove and the second shoulder are adjacently arranged on two sides of the second segment in the axial direction of the drive motor.

15. An electric vehicle, wherein the electric vehicle comprises a power battery and the powertrain according to any one of claims 1 to 14, and the powertrain is configured to receive power supply from the power battery and is configured to drive wheels of the electric vehicle.
